# EUROPEAN PATENT APPLICATION

(11) **EP 1 995 928 A1**
(43) Date of publication of application: **26.11.2008**
(21) Application number: 07301061.3
(22) Date of filing: 24.05.2007
(51) Int. Cl.: H04L 29/06

(54) **Method for controlling a communicaton of a mobile node and related home agent and gateway**

(71) Applicant: France Télécom, 75015 Paris (FR)
(72) Inventor: Antoine, Stéphane, LONDRES, W42PZ (GB)
(74) Representative: Cabinet Plasseraud

(57) **Abstract**

The invention proposes to control a communication of a mobile node (3), said communication comprising packet transmission from a home agent (4) to the mobile node over at least one first tunnel. After detecting that the communication can be continued over a second tunnel (T2) between the home agent and the mobile node, packets are transmitted from the home agent to the mobile node over only one master tunnel among said first tunnel and second tunnel. And a gateway (GW2;GW) through which said master tunnel goes is commanded to copy said packets and to forward the copied packets to the mobile node as if said packets were transmitted over the non master tunnel from the mobile node's point of view.

## Description

The present invention relates to the control of a communication in a context of mobility.

According to the Internet Protocol IP and the mobility aspects developed within the framework of the IP technology (mobile IP), a mobile node (MN) can be defined as a host capable of changing its point of attachment (or access point) from one network to another. In this context, a network should be understood as a whole network or a subnetwork.

A mobile node that was initially communicating with an Internet node may continue to communicate with other Internet nodes at any location using its constant IP address, assuming link-layer connectivity to a point of attachment is available.

This constant IP address is a long-term IP address on a home network: the home address (HoA). When away from its home network, a care-of address (CoA) is further associated with the mobile node and reflects the mobile node's current point of attachment.

The mobility service provided in an IP environment generally requires a home agent (HA). The home agent is a router that maintains current location information for the mobile node.

When a mobile node, away from its home network, registers with its home agent, it creates a mobility binding which is the association of the home address with a care-of address, along with the remaining lifetime of that association. The home agent then tunnels packets (or datagrams) for delivery to the mobile node, by taking account of said mobility binding.

Simultaneous bindings may exist for a mobile node's home address. This is supported in particular by mobile IPv4. To do so, a mobile node can request its home agent to maintain previous mobility bindings as it registers with a new care of address. This is generally achieved at the mobile node by setting (to 1) a particular bit, called 'S' bit, in a registration request sent to the home agent, as explained in section 3.6.1.2 of the Request for Comments RFC 3344 "IP Mobility Support for IPv4", published in August 2002 by the IETF (Internet Engineering Task Force). By contrast, when the S bit is not set, the home agent deletes any previous binding for the mobile node and replaces it with the new binding specified in the registration request.

If the home agent supports the optional capability of multiple simultaneous mobility bindings, incoming packets addressed to the mobile node's home address are copied by the home agent and tunnelled to each care-of address of the mobile node's mobility binding list. The mobile node will receive multiple copies of the packets addressed to it.

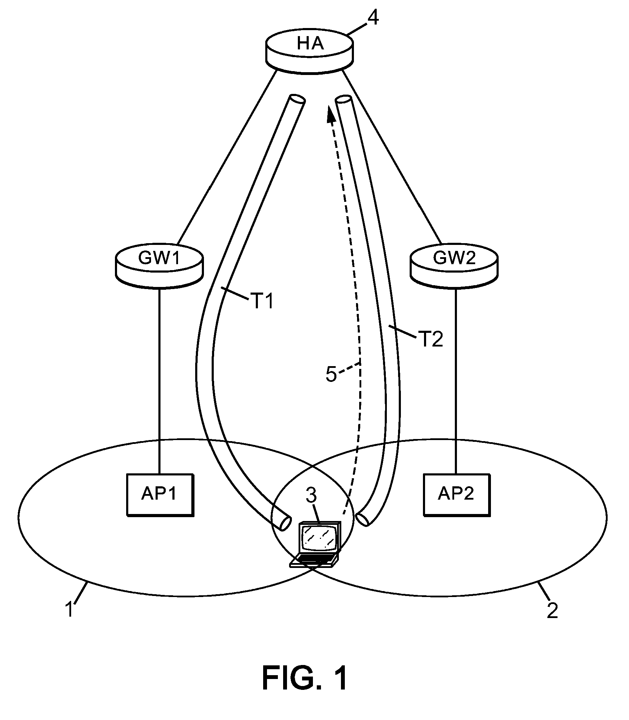

This situation is illustrated in FIG.1. In this figure, a mobile node 3 is initially under coverage 1 of an access point AP1 in a foreign network. It thus first receives packets from its home agent 4 over a tunnel T1 that goes through a gateway GW1 connecting AP1 with the home agent 4. In addition to its home address HoA, the mobile node 3 holds a care of address CoA1 which corresponds to the termination point of the tunnel T1 and reflects AP1.

When the mobile node 3 enters the coverage 2 of an access point AP2 in another foreign network, it registers with its home agent 4 by using a new care of address CoA2 which reflects AP2 and corresponds to the termination point of a tunnel T2 between the home agent 4 and the mobile node 3 and which goes through a gateway GW2. This registration can be interpreted as the mobile node 3 being capable of continuing its communication over T2.

If the registration request 5 includes a S bit set, the home agent 4 maintains both bindings corresponding to both care of addresses CoA1 and CoA2. It then continues to transmit packets to the mobile node 3 over T1, but it further duplicates these packets to transmit them over T2 as well.

Simultaneous binding thus reduces packet loss during a transfer of the communication from one Internet node to another. It may also limit the sound perception of the communication transfer by the user of the mobile node. Such mode of operation can thus be viewed as a case of seamless handover.

Simultaneous binding, however, causes the home agent to keep several bindings in memory but also to perform packets duplication and tunnel each copy to the mobile node's care of addresses. It is thus consuming in particular in terms of processing (CPU) usage for the home agent. It also consumes lots of network resources on the home network. This situation can even become critical when the home agent in question is serving a plurality of mobile nodes and the binding cache entry lifetime is high.

An object of the present invention is to alleviate at least some of these drawbacks.

The invention proposes a method for controlling a communication of a mobile node, said communication comprising packet transmission from a home agent to the mobile node over at least one first tunnel. The method comprises the following steps, after detecting that the communication can be continued over a second tunnel between the home agent and the mobile node:
- transmitting packets from the home agent to the mobile node over only one master tunnel among said first tunnel and second tunnel; and
- commanding a gateway through which said master tunnel goes to copy said packets and to forward the copied packets to the mobile node as if said packets were transmitted over the non master tunnel from the mobile node's point of view.

In this way, the packet duplication and forwarding is delegated to the gateway, thereby saving processing (CPU) usage for the home agent as well as occupation of certain links of the home agent. Duplication of the packets is still carried out however, which enable performing seamless handover.

Advantageously, the gateway is a Network Address Translation (NAT) gateway.

The master tunnel may advantageously be the second tunnel, since it is likely that the communication will continue over this second tunnel after the handover is completed. The first tunnel could however be selected as the master tunnel.

There may be a first gateway through which the first tunnel goes and a second gateway through which the second tunnel goes. The first gateway and the second gateway may be a single gateway or different gateways. In case of different gateways, the gateway commanded to copy the packets and to forward the copied packets to the mobile node as if the packets were transmitted over the non master tunnel from the mobile node's point of view advantageously is the first gateway if the master tunnel is the first tunnel and the second gateway if the master tunnel is the second tunnel.

The above mentioned mode of operation can result from registration of the mobile node with the home agent, by using a care of address corresponding to the termination point of the second tunnel. Such registration can indeed be interpreted as an indication that the communication of the mobile node can continue with the second tunnel.

Commanding the gateway can comprise the home agent sending said gateway an instruction message including information relating to the non master tunnel. Information relating to the master tunnel could be included instead or in addition, unless it can be derived directly from the information relating to the non master tunnel.

In this case, an acknowledgment of said instruction message may be sent by the gateway.

In order to have an efficient seamless handover in spite of the fact that the delegation of the packet duplication and forwarding to the gateway may take time, the home agent may transmit packets to the mobile node over both first tunnel and second tunnel during the intermediate period, for instance between detecting that the communication can be continued over the second tunnel and receiving an acknowledgment of said instruction message.

In order to forward the copied packets to the mobile node as if said packets were transmitted over the non master tunnel from the mobile node's point of view, the gateway may forward copied packets built from said packets by presenting the home agent as source and an end point of the non master tunnel as destination.

The invention further proposes a home agent capable of controlling a communication of a mobile node, said communication comprising packet transmission from the home agent to the mobile node over at least one first tunnel. The home agent comprises:
- detection means for detecting that the communication can be continued over a second tunnel between the home agent and the mobile node;
- means for, after the detection means have detected that the communication can be continued over the second tunnel, transmitting packets to the mobile node over only one master tunnel among said first tunnel and second tunnel; and
- means for, after the detection means have detected that the communication can be continued over the second tunnel, commanding a gateway through which said master tunnel goes to copy said packets and to forward the copied packets to the mobile node as if said packets were transmitted over the non master tunnel from the mobile node's point of view.

The invention also proposes a gateway capable of participating in the control of a communication of a mobile node, said communication comprising packet transmission from a home agent to the mobile node over at least one first tunnel. The gateway comprises means for, after it has been detected that the communication can be continued over a second tunnel between the home agent and the mobile node, copying packets transmitted from the home agent to the mobile node over only one master tunnel among said first tunnel and second tunnel and going through said gateway and forwarding the copied packets to the mobile node as if said packets were transmitted over the non master tunnel from the mobile node's point of view.

This gateway advantageously comprises functions of a Network Address Translation (NAT) gateway.

The invention further proposes a computer program product comprising code instructions for carrying out the above mentioned method, when loaded and run on computer means.

The preferred features of the above aspects which are indicated by the dependent claims may be combined as appropriate, and may be combined with any of the above aspects of the invention, as would be apparent to a person skilled in the art.
- FIG.1, already discussed, shows a packet duplication performed at the home agent according to prior art;
- FIG.2 shows a gateway packet duplication on behalf of the home agent according to the invention, in a multiple gateways context;
- FIG.3 shows a gateway packet duplication on behalf of the home agent according to the invention, in a single gateway context;
- FIG.4 shows a master tunnel option that may be used in an advantageous embodiment of the invention;
- FIG.5 shows a tunnel option that may be used in an advantageous embodiment of the invention;
- FIG.6 shows a duplication table that may be used at a gateway in an advantageous embodiment of the invention;
- FIG.7 shows the structure of an acknowledgment message that may be used in an advantageous embodiment of the invention;

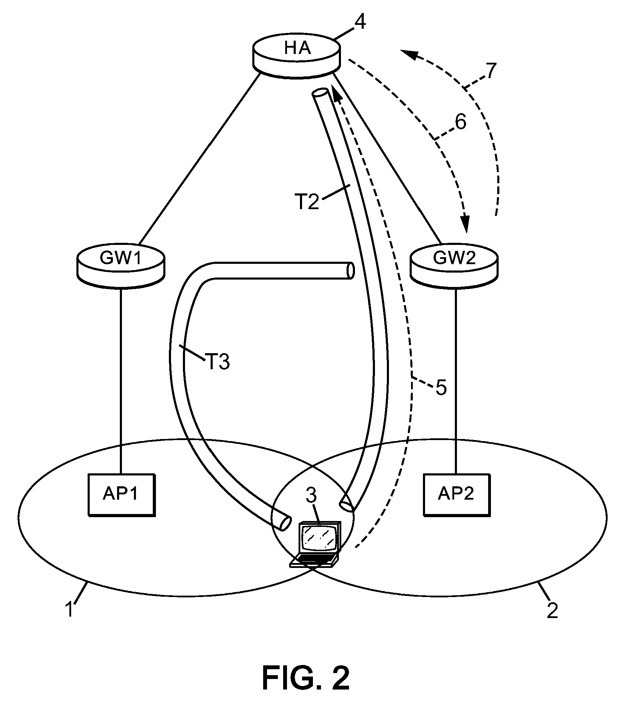

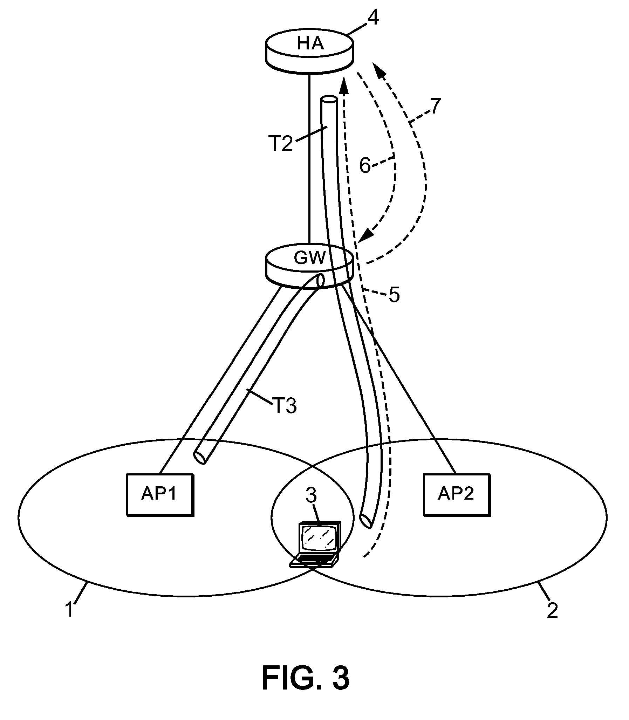

The invention will be first described in a general way with reference to FIGs 2 and 3.

FIG.2 shows a situation similar to the one illustrated in FIG.1 already commented. In this example, a mobile node 3 is initially under coverage 1 of an access point AP1 in a foreign network. It thus first receives packets from its home agent 4 over a first tunnel T1 (not represented, but similar to the one shown in FIG.1) that optionally goes through a first gateway GW1 connecting AP1 with the home agent 4. In addition to its home address HoA, the mobile node 3 holds a care of address CoA1 which corresponds to the termination point of the tunnel T1 and reflects AP1.

Of course, the packets could also be transmitted initially over other tunnels in addition to T1, in particular when the mobile node 3 is under overlapping coverages of several access points belonging to different networks (or subnetworks).

Then it is detected that the mobile node 3 can continue the communication over a second tunnel T2 between the home agent 4 and the mobile node 3 and which optionally goes through a second gateway GW2 connecting a second access point AP2 with the home agent 4. This can result for instance from the mobile node 3 moving from the coverage 1 to the coverage 2 of AP2 in another foreign network.

After this detection has occurred, packets are transmitted from the home agent 4 to the mobile node 3 over only one of the tunnels T1 and T2. This tunnel is herein designated as the master tunnel. In the example illustrated in FIG.2, it is considered that the master tunnel is T2, since the packets are transmitted from the home agent 4 to the mobile node 3 over T2 only. This situation may be advantageous, in particular when the mobile node 3 moves from the coverage 1 to the coverage 2, because it is likely that the communication will continue over T2 at the end of the communication transfer.

Alternatively, T1 could be the master tunnel. This may happen when for example the MN moves from the coverage 1 under GW1 to a coverage 2 without any gateway (GW2 is not present in this case). In this case, the tunnel T2, which is the most recent tunnel, will not traverse any gateway. The packet duplication which will be detailed below is thus delegated to GW1 and the corresponding instruction message exchange will take place between the home agent and GW1.

In addition, GW2, which is the gateway through which the master tunnel T2 goes in the illustrated example, is commanded to copy the packets received from the home agent 4 and to forward the copied packets to the mobile node 3 as if the packets were transmitted over the non master tunnel T1 from the mobile node's point of view. This is shown in FIG.2 by virtue of a path T3 between GW2 and the mobile node 3.

In this way, the mobile node 3 receives packets both from GW1 and GW2, and thus duplicate data, like in the prior art mode of operation described in the introduction. However, the packet duplication is performed by GW2 in the example shown in FIG.2, rather than by the home agent 4. In other words, GW2 sends traffic on behalf of the home agent 4. Consequently, processing (CPU) usage for the home agent 4 as well as occupation of the link between the home agent 4 and GW1 are saved.

Selecting T2 as the master tunnel and commanding GW2 to copy packets and forward the copied packets to the mobile node 3 over the path T3 can be carried out after registration of the mobile node 3 with the home agent 4, by using a care of address CoA2 corresponding to the termination point of T2.

In this case, the registration request 5 advantageously has its S bit set, so that the home agent 4 maintains both bindings corresponding to both care of addresses CoA1 and CoA2.

Advantageously, commanding GW2 to copy the packets and to forward the copied packets to the mobile node 3 as if the packets were transmitted over the non master tunnel T1 from the mobile node's point of view comprises the home agent 4 sending GW2 an instruction message 6 including information relating to the non master tunnel T1 and/or to the master tunnel T2.

In order to ensure an efficient seamless handover, the home agent 4 can first transmit packets to the mobile node 3 over both tunnels T1 and T2 after detecting that the communication can be continued over T2. Then, on reception of an acknowledgment 7 of said instruction message 6, the home agent 4 can move to the mode of operation described above, that is transmitting packets over the master tunnel T2 only and commanding GW2 to copy said packets and to forward the copied packets to the mobile node 3 as if said packets were transmitted over the non master tunnel T1 from the mobile node's point of view.

It should be noted that GW1 and GW2 could relate to any kind of gateways, provided that they differ from the home agent 4.

In an advantageous embodiment that will be adopted in the following of the description, at least one of them is a Network Address Translation (NAT) gateway. It is reminded that a NAT gateway performs a translation between one routable external IP address or a limited number of IP addresses and the non routable internal IP addresses of devices of a network. The translation mechanism enables to secure the internal network, since it conceals the internal addressing. When used in IPv4, it also makes up for shortage of IP addresses.

With reference to FIG.2, GW1, as a NAT gateway, may store a mapping table ensuring a translation between the internal care of address CoA1 of the mobile node 3 and its own external IP address IP0. The mapping table may also include a corresponding translation between an internal port P1 and an external port P10 for instance.

Likewise, GW2, as a NAT gateway, may store a mapping table ensuring a translation between the internal care of address CoA2 of the mobile node 3 and its own external IP address IP1. The mapping table may also include a corresponding translation between an internal port P2 and an external port P20 for instance.

FIG.3 shows a different architecture in which the access points AP1 and AP2 are both connected to the home agent 4 through the same gateway GW. In other words, with respect to the references used in FIG.2, GW=GW1=GW2.

The same mode of operation as described above applies however to the architecture shown in FIG.3.

An advantageous embodiment of the present invention will now be described. It should not be understood as limiting the general principles of the invention as claimed and described above.

This part of the description makes the following assumptions.

The considered mobile node (MN) is a multi-homed MN that is capable of retaining simultaneously several care of addresses (CoAs) and that is reachable at each of its care of addresses. The MN is keeping the same home address (HoA) throughout a communication session. The MN registers with a newly acquired care of address, and does not de-register its previous care of address, for instance as the S bit is set in the registration request.

The MN also registers its last CoA from behind a Network Address Translation (NAT) gateway, as described in particular in the Request for Comments RFC 3519 "Mobile IP Traversal of Network Address Translation (NAT) Devices", published in April 2003 by the IETF (Internet Engineering Task Force). Only one NAT gateway is considered hereafter, like in the example described above with reference to FIG.3. Alternatively, several NAT gateways could also be used. In this case, the role played by each one of the NAT gateways will clearly appear to one skilled in the art. The NAT gateway through which the master tunnel goes will generally play the main role as explained in the example described above with reference to FIG.2.

This part of the description makes use of two notions that are defined herebelow.

A master binding can be defined as a selected one of a plurality of bindings held by a HA for the same HoA. The use of only one master binding instead of multiple bindings to forward a packet to the MN's HoA will prevent the HA to perform packets duplication hence saving HA Central Processing Unit (CPU) resources. As a non limiting example, the master binding may correspond to the binding of the last registered care of address.

A master tunnel can be defined as the forward tunnel associated with the master binding. In the non limiting example mentioned above, it ends at the last registered care of address, i.e. the care of address with which the MN last registered. The HA may be the entry point of several tunnels for a given MN's HoA, each tunnel ending at each of the MN's registered care of addresses. However the HA will have only one master tunnel for a given HoA.

In the present embodiment, a considered MN has registered with the care of address (CoAn-1) and home address (HoA). It is receiving tunneled packets from its home agent (HA) at its CoAn-1 through a master tunnel.

The MN then acquires a new care of address (CoAn) that it advantageously registers. The MN advantageously sends a registration request to the HA with the S bit set in the registration request message, as explained in section 3.6.1.2 of the above mentioned RFC 3344.

The HA receives the registration request and registers the MN's care of address CoAn. In this example, the source address of the registration request is the public IP address of the NAT gateway. The HA has detected that the MN is behind a NAT gateway for the source address of the registration request message is different from the care of address CoAn.

The HA creates an additional binding cache entry for the MN's CoAn without deleting the previous binding(s) (including binding for CoAn-1). The binding for HoA that points to CoAn-1 is the master binding at the time of the registration of CoAn.

Advantageously, the HA starts copying each data packet addressed to the HoA and sends each copy to each of the MN's care of addresses. Copied packets are tunneled to CoAn-1 and CoAn.

The HA then advantageously sends an instruction message to the IP address of the NAT gateway whose IP address appears as the MN's newly created tunnel exit point. The instruction message contains instruction to cause the NAT gateway to copy data packets on behalf of the HA.

In response to the instruction message, the NAT gateway advantageously sends an acknowledgement (ACK) message to the HA. In this non-limiting example, ACK causes the newly registered binding to become the master binding and the associated tunnel, the master tunnel. The previous master tunnel (tunnel to CoAn-1) becomes INACTIVE (when a forward tunnel is marked INACTIVE, it will not be used to send packets; a forward tunnel that is not marked with the label INACTIVE is regarded by IP as ACTIVE; in particular the master tunnel is an ACTIVE tunnel; a status field may be appended to each binding cache entry to determine whether the corresponding tunnel is ACTIVE or INACTIVE). The reception of the ACK message will cause the HA to stop duplicating packets and stop sending any packet along the previous tunnel ending in CoAn-1.

When the HA implements the embodiment described above, it will have at the most two ACTIVE tunnels for a given HoA: the master tunnel and the newly created one that is to become the new master tunnel. The current master tunnel is ACTIVE before the correct processing by the HA of the ACK message. Then the current master tunnel becomes INACTIVE as the newly registered tunnel is elected as the new master tunnel. During the time duration that elapses between the registration of the new care of address CoAn and the reception of the ACK message, the HA may duplicate packets to both CoAn and CoAn-1. This helps making an efficient seamless handover.

Implementation details of the advantageous embodiment described above will now be described. Of course, other implementations, in addition to or in replacement of the ones described below, would suit as well as will appear to one skilled in the art.

Implementation details concerning maintenance of multiple bindings and tunnels at the HA are first discussed.

When the MN sends a registration request with the S bit set, the HA creates a new binding without deleting the old binding cache entry for the previous CoAs and it maintains simultaneous tunnels with the previous CoAs and the new CoA.

The main fields of the binding bn for CoAn at the HA are as follows: home address = HoA, care of address = CoAn, source address = IPn, lifetime granted = Lifetime_granted_Value, remaining lifetime = Remaining_Lifetime_Value, Identification = Identification_Value.

The main fields of the binding bn-1 for CoAn-1 at the HA are as follows: home address= HoA, care of address = CoAn-1, source address= IPn-1, lifetime granted = Lifetime_granted_Value, remaining lifetime = Remaining_Lifetime_Value, Identification = Identification_Value.

The HA has just created a new forward UDP (User Datagram Protocol) tunnel tn whose source is the HA and whose end is IPn. The HA is now maintaining two tunnels, tn and tn-1, to both IPn and IPn-1 respectively.

The details of these forward tunnels are as follows:
for tn: source IP address = HA, destination IP address = IPn, source port = 434, destination port = DEST_PORT_n.
for tn-1: source IP address = HA, destination IP address = IPn-1, source port = 434, destination port = DEST_PORT_n-1.

The corresponding reverse tunnels rn and rn-1, terminating at the HA, are as follows:
for rn : source IP address = IPn, destination IP address = HA, source port = DEST_PORT_n, destination port =434.
for rn-1: source IP address = IPn-1, destination IP address = HA, source port = DEST_PORT_n-1, destination port =434.

IPn always refers to the global IP address given by the NAT gateway. The source address of the registration request after NAT is traversed is IPn. IPn is reverse translated in the private address CoAn.

DEST_PORT_n, given by the NAT gateway, is the source port of the UDP header of the registration request whose source IP address is IPn.

It will be noted that if CoAn-1 was a public address, IPn-1 would be equal to CoAn-1.

IPn-1 could also be a public IP address of the NAT gateway which is reverse translated in the private address CoAn-1. CoAn-1 and CoAn could have been allocated from behind the same NAT gateway, like in the example described with reference to FIG.3 (this does not necessarily mean that IPn-1 = IPn because the allocation of the public IP address of the NAT as source address of a request issued from behind the NAT is sometimes given randomly from a pool of IP addresses).

Several scenarios could be envisioned. However, the notations used in the presentation of the bindings and tunnels above are generic and are not bound to a particular scenario.

Some implementation details about the instruction message sent to the NAT gateway, like the instruction message 6 shown in FIGs. 2 and 3, will now be given. The instruction message may be a UDP packet whose details may be as follows.

Its IP and UDP header information could be as follows: source IP address = IP address of the HA, destination IP address = IP_n (end of the tunnel to become the master tunnel in this non-limiting example), UDP header = ports number to be specified.

As far as its body is concerned, the instruction message conveys in extensions fields, the list of tunnel end points for the MN's HoA. The instruction message gives the NAT gateway the necessary information to enable it to duplicate packets and tunnel them on behalf of the HA.

The instruction message advantageously conveys two message portions designated by: the master tunnel option and the tunnel option. Only some or part of these message portions could be included in the instruction message, provided that it carries sufficient information for the NAT gateway to correctly identify the master tunnel and the non master tunnel(s). In particular, only the tunnel option could be used if the NAT gateway is capable of deriving therefrom an identification of the master tunnel (e.g. the only forward tunnel from the HA to the MN which is not listed in the tunnel option).

The master tunnel option contains identification for the tunnel to become the master tunnel, that is the last created tunnel in the considered non-limiting example.

The tunnel option contains information for non master tunnels, that is tunnels previously created at the HA in the considered non-limiting example. For simplicity, the instruction message may bear only one tunnel information per extension. Each option of the message body corresponds to an existing forward tunnel, which may be INACTIVE.

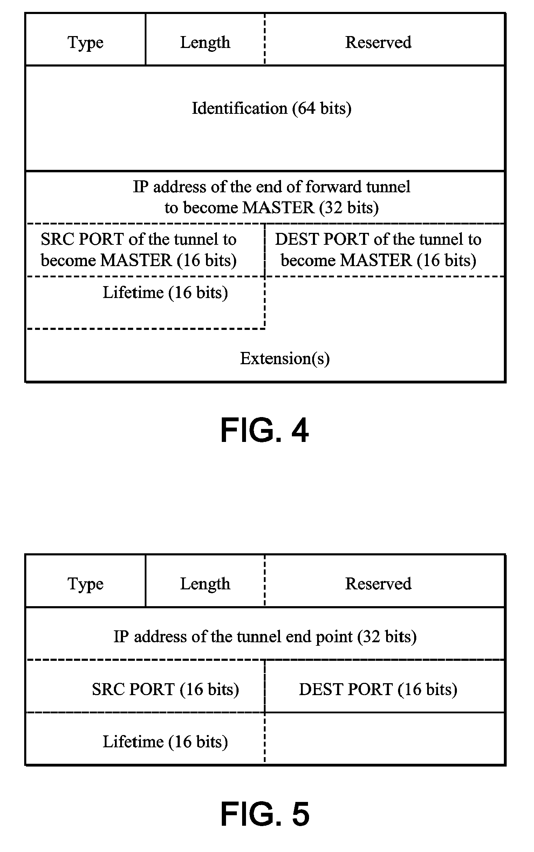

The fields of the master tunnel option may be as shown on FIG.4 and as described below:
- Type: To be decided (TBD).
- Length: Length of the extension.
- Reserved: For possible extensions to this option.
- Identification: A 64 bit number, constructed by the HA, used for matching the instruction message and the acknowledgement, and for protecting against replay attacks.
- IP address of the tunnel end point: Destination IP address of the end point of the tunnel to be elected as master tunnel.
- Source port: The source port of the tunnel to be elected as master tunnel. It is 434.
- Destination Port: The destination port of the tunnel to be elected as master tunnel.
- Lifetime: Remaining lifetime of the tunnel at the time of sending the instruction message. It is copied from the HA and its value could be very close to the lifetime granted.
- Extension: The portion of the tunnel extension is followed by one or several tunnel options.

The fields of the tunnel option may be as shown on FIG.5 and as described below, with respect to a given forward tunnel:
- Type: To be decided (TBD).
- Length: Length of the extension.
- Reserved: For possible extensions to this option.
- IP address of the tunnel end point: Destination IP address of the forward tunnel.
- Source port: The source port of the tunnel. It is 434.
- Destination Port. The destination port of the tunnel.
- Lifetime: Remaining lifetime of the tunnel at the time of sending the instruction message. It is copied from the HA and its value could be higher than the remaining lifetime of the tunnel to become master. This is because previous bindings could have been refreshed after the creation of the last binding.

Implementation details about processing of the instruction message by the NAT gateway are given hereafter.

Successful processing of each of the tunnel option of the instruction message generates the creation of a re-forwarding entry originating at the NAT gateway.

A re-forwarding entry created at the NAT gateway contains the information of the forward tunnel at the HA. For a given HoA, multiple re-forwarding entries may be created. Each re-forwarding entry contains a replica of the information of the associated forward tunnel. For a given HoA, a re-forwarding entry will be created for each INACTIVE forward tunnel. For the master tunnel, no re-forwarding entry is necessary at the NAT gateway.

Each re-forwarding entry created at the NAT gateway by the instruction message may have the following structure:

| Source of the tunnel | End of the tunnel "i" | Source Port | Destination port | Lifetime |
|---|---|---|---|---|
| HA IP address | DEST_IP_ADDR_i | 434 | DEST_PORT_i | Value |

where DEST_IP_ADDR_i is the IP address contained in the corresponding tunnel end point field of the instruction message, that is the address of the end of the forward tunnel, DEST_PORT_i is the destination port of the corresponding tunnel option of the instruction message, and the lifetime value corresponds to the lifetime received in the option of the instruction message for that tunnel. This lifetime value can be seen as the difference between the lifetime received in the instruction message and the propagation time of the message. However, for simplicity, it can be set equal to the corresponding tunnel lifetime at the HA.

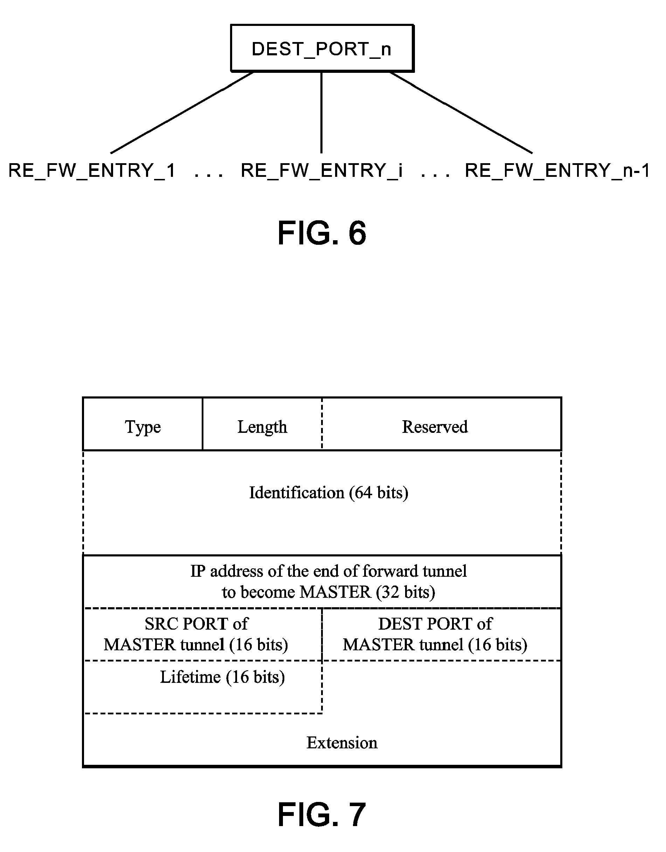

On processing the instruction message, the NAT gateway can create a packet duplication table. The processing of the instruction message thus generates one entry in the packet duplication table for each tunnel option correctly processed. An entry in the packet duplication table is the association of the destination port DEST_PORT_n of the master tunnel and a re-forwarding entry RE_FW_ENTRY_i created at the NAT gateway, where 1≤i≤n-1. The table may have the format shown in FIG.6.

The duplication table thus associates the destination port of the master tunnel with each re-forwarding entry. FIG.6 shows up to n-1 re-forwarding entries associated to the master tunnel whose destination port is DEST_PORT_n. Each of these re-forwarding entries is a replica of the information of an HA originated tunnel and is advantageously created from the same instruction message. Each of these re-forwarding entries can be used to convey duplicate packets.

When one of the re-forwarding entries of the duplication table expires through its lifetime becoming 0, the corresponding entry is removed from the table. Advantageously, the expiration of one of the entries of the duplication table occurs simultaneously with the expiration of its associated tunnel at the HA. This is achieved by the synchronisation of their lifetimes.

When the NAT gateway receives a UDP packet whose destination port matches "DEST_PORT_n", the packet is copied in n-1 instances, n-1 being the number of entries of the duplication table in this example. Each instance of the copied packet can be processed by the NAT gateway according to the following algorithm for instance:

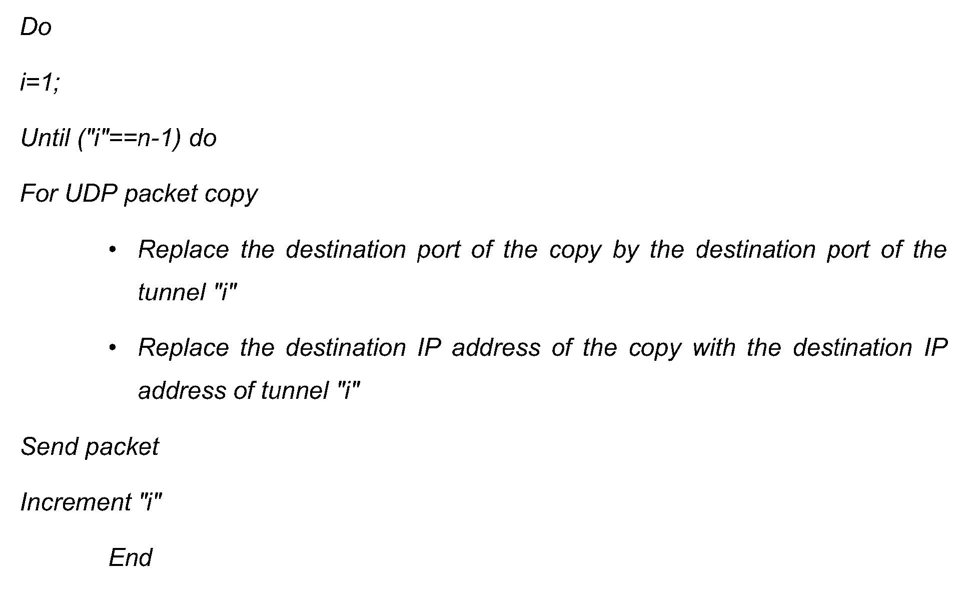

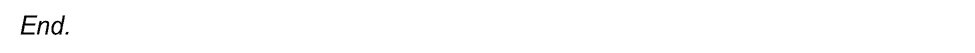

The NAT gateway can send an acknowledgement (ACK) message to the HA, like the acknowledgment 7 shown in FIGs 2 and 3. The ACK message is advantageously sent after the duplication has started for a created re-forwarding entry. This will cause the HA to stop packet duplication and thus stop sending them onto the previous tunnel(s). Alternatively, the ACK message may be sent before the duplication has started at the NAT gateway level.

When used, the ACK message sent by the NAT gateway may contain information about the tunnel to be elected by the HA as master tunnel.

In particular, the IP fields of the ACK message can be as follows:
source IP address = public IP address of the NAT gateway. It is the destination address of the instruction message. In this non-limiting example, it is the IP address registered at the HA as the tunnel end point for the most recent tunnel created for the HoA.
destination IP address = IP address of the HA.

The UDP header contains a source port and a destination port whose values are to be defined (TBD).

As shown in FIG.7, following the UDP header, the ACK message may contain fields as follows:
- Type: ACK of the instruction message.
- Length: Length of the extension.
- Reserved: For possible extensions to this option.
- Identification: A 64 bit number, used for matching the instruction message and the acknowledgement, and for protecting against replay attacks.
- IP address of the end point of the forward tunnel to become master tunnel. It is copied from the master tunnel option of the instruction message.
- Source port of the master tunnel: Source port of the tunnel to be elected as master. It is copied from the instruction message.
- Destination port: Destination Port of the tunnel to be elected as master. It is copied from the instruction message.
- Lifetime: Lifetime of the tunnel copied from the HA.
- Extension: for further extensions.

Upon successful processing of the ACK message, the HA advantageously establishes the master tunnel.

The ACK message thus contains the tunnel information (source port, destination port, IP address) of the tunnel to become the master tunnel. This master tunnel can be associated with the master binding for the home address (HoA).

When the HA receives an ACK message from the NAT gateway containing information for a tunnel, it advantageously marks that tunnel as ACTIVE. This tunnel now becomes the master tunnel, and all other tunnels that correspond to the same HoA become INACTIVE. Turning a tunnel into INACTIVE can be done by filling the STATUS field of the associated binding. When the STATUS field indicates INACTIVE, then the tunnel associated with this binding is INACTIVE.

When the STATUS field appended into a HA binding cache entry for the given home address indicates INACTIVE, the HA will not use that binding cache entry to send any packet into the associated tunnel. The HA will stop sending packets onto the tunnel whose binding cache entry STATUS indicates INACTIVE.

The HA with multiple bindings for a given HoA then stops duplicating any packet for that HoA and simply tunnels the packet to HoA using the master tunnel.

Implementation details about the way packets are tunneled to the MN's HoA are now examined.

When the HA receives a packet destined to the MN's HoA, for which multiple bindings exist at the HA, the HA checks the STATUS field of each binding for that home address. If the STATUS field of a binding cache entry is INACTIVE, the HA refrains from duplicating the packet for that binding. As a result, a copy of the original packet is not sent along the INACTIVE tunnel.

Eventually, when the HA has multiple bindings for a HoA, it only forwards the packet destined to that HoA along the tunnels marked ACTIVE. By default, in mobile IP, all tunnels are active. According to the embodiment described here however, for a given HoA, only the master tunnel is ACTIVE.

The packet tunneled by the HA will be received by the NAT gateway IP address. As already mentioned, on reception of a packet tunneled from a HA, the NAT gateway advantageously proceeds as follows.

When the NAT gateway receives a tunneled UDP packet whose destination port number is the DEST_PORT_n registered in the NAT gateway duplication table, the NAT gateway duplicates the packet before submitting it to reverse NAT translation.

The NAT gateway duplication table for a given HoA may contain several entries. All entries are bound to the same destination port number: DEST_PORT_n (port of the master tunnel). For each of these entries, the packet with DEST_PORT_n value in the destination port field will be copied. Each copy will be sent along a re-forwarding entry.

The sending of a copied UDP packet along a re-forwarding entry RE_FW_ENTRY_i created by the NAT gateway may follow the following steps.

The NAT gateway overwrites the destination port value in the destination port field of the copied UDP packet and replaces it by DEST_PORT_i, which is the new destination port of the copied packet. DEST_PORT_i is taken from the information stored from the re-forwarding entry RE_FW_ENTRY_i of the duplication table.

The NAT gateway also overwrites the destination IP address value in the destination IP address field of the copied UDP packet (or more precisely of the outer IP packet of the copied UDP packet) and replaces it by DEST_IP_ADDR_i. DEST_IP_ADDR_i is the value of the destination IP address of the re-forwarding entry RE_FW_ENTRY_i of a forward tunnel stored in the duplication table.

After the previous operations, the details of the copied packet sent along each re-forwarding entry RE_FW_ENTRY_i may be as follows:
IP source address = HA address;
IP destination address = DEST_IP_ADDR_i;
UDP source port = 434 ;
UDP destination port = DEST_PORT_i.

A packet sent along a re-forwarding entry of the duplication table is not encapsulated. It is just re-forwarded with a different destination IP address and port number.

In this way, each packet sent along a re-forwarding entry RE_FW_ENTRY_i is as if a corresponding packet was transmitted over the non master tunnel i corresponding to this re-forwarding entry from the MN's point of view. This is in particular because the details of this packet show the HA as source and the end point of the tunnel i as destination, as mentioned above.

After the copying and re-forwarding operations of the original packet, the original packet whose destination port number is DEST_PORT_n may simply undergo reverse NAT translation by use of a mapping table of the NAT gateway.

When all the tunnels involved go through the same NAT gateway, the re-forwarded packets may also undergo reverse NAT translation by use of the mapping table of said NAT gateway.

Alternatively, re-forwarded packets may be addressed to another NAT gateway. In that case, the NAT gateway receiving the re-forwarded packets passes them in its reverse IP - port mapping table. The mapping for the couple DEST_PORT_i - DEST_IP_ADDR_i exists in the recipient NAT gateway because, in this case, the MN had registered through that NAT gateway.

In case the destination of the re-forwarded packets is not a NAT gateway, the packets may be simply delivered to the MN's care of address.

The MN may well re-register (renew its registration) with one of its care of addresses which is not registered with the master binding cache entry. Renewing a previous binding will confer the associated INACTIVE tunnel the highest lifetime value. Updating the lifetime value of a binding does not change the STATUS of the corresponding tunnel however. The master tunnel can thus simply be the tunnel whose binding was last created by a registration request.

When the lifetime of a binding becomes 0, the communication then continues over the other tunnels only. It may thus happen that the communication continues only over the master tunnel after a certain time. In this situation, the handover can be considered as completed.

As already mentioned, the implementation details described above relate to an advantageous mode of operation of the invention. However, other implementation details could suit to carry out the invention as will appear to one skilled in the art.

## Claims

1. A method for controlling a communication of a mobile node (3), said communication comprising packet transmission from a home agent (4) to the mobile node over at least one first tunnel, the method comprising the following steps, after detecting that the communication can be continued over a second tunnel (T2) between the home agent and the mobile node:
- transmitting packets from the home agent to the mobile node over only one master tunnel among said first tunnel and second tunnel; and
- commanding a gateway (GW2;GW) through which said master tunnel goes to copy said packets and to forward the copied packets to the mobile node as if said packets were transmitted over the non master tunnel from the mobile node's point of view.

2. The method as claimed in claim 1, wherein the gateway is a Network Address Translation (NAT) gateway.

3. The method as claimed in claim 1 or 2, wherein the master tunnel is the second tunnel (T2).

4. The method as claimed in any one of the foregoing claims, wherein said steps are carried out after registration (5) of the mobile node (3) with the home agent (4), by using a care of address corresponding to the termination point of the second tunnel (T2).

5. The method as claimed in any one of the foregoing claims, wherein commanding the gateway (GW2;GW) through which said master tunnel goes to copy said packets and to forward the copied packets to the mobile node (3) as if said packets were transmitted over the non master tunnel from the mobile node's point of view comprises the home agent (4) sending said gateway an instruction message (6) including information relating to the non master tunnel.

6. The method as claimed in claim 5, wherein receiving an acknowledgment (7) of said instruction message (6) from said gateway (GW2;GW) triggers said steps, the home agent (4) transmitting packets to the mobile node (3) over both first tunnel and second tunnel (T2) between detecting that the communication can be continued over the second tunnel and receiving the acknowledgment of said instruction message.

7. The method as claimed in any one of the foregoing claims, wherein commanding the gateway (GW2;GW) through which said master tunnel goes to copy said packets and to forward the copied packets to the mobile node (3) as if said packets were transmitted over the non master tunnel from the mobile node's point of view causes the gateway to forward copied packets built from said packets by presenting the home agent (4) as source and an end point of the non master tunnel as destination.

8. A home agent (4) capable of controlling a communication of a mobile node (3), said communication comprising packet transmission from the home agent to the mobile node over at least one first tunnel, the home agent comprising:
- detection means for detecting that the communication can be continued over a second tunnel (T2) between the home agent and the mobile node;
- means for, after the detection means have detected that the communication can be continued over the second tunnel, transmitting packets to the mobile node over only one master tunnel among said first tunnel and second tunnel; and
- means for, after the detection means have detected that the communication can be continued over the second tunnel, commanding a gateway (GW2;GW) through which said master tunnel goes to copy said packets and to forward the copied packets to the mobile node as if said packets were transmitted over the non master tunnel from the mobile node's point of view.

9. A gateway (GW2;GW) capable of participating in the control of a communication of a mobile node (3), said communication comprising packet transmission from a home agent (4) to the mobile node over at least one first tunnel, the gateway comprising means for, after it has been detected that the communication can be continued over a second tunnel (T2) between the home agent and the mobile node, copying packets transmitted from the home agent to the mobile node over only one master tunnel among said first tunnel and second tunnel and going through said gateway and forwarding the copied packets to the mobile node as if said packets were transmitted over the non master tunnel from the mobile node's point of view.

10. The gateway (GW2;GW) as claimed in claim 8, comprising functions of a Network Address Translation (NAT) gateway.

11. A computer program product comprising code instructions for carrying out the method as claimed in any one of claims 1 to 7, when loaded and run on computer means.
